# FASCICULE DE BREVET EUROPEEN

(11) **EP 2 728 231 B1**
(45) Date de publication et mention de la délivrance du brevet: **06.05.2015**
(21) Numéro de dépôt: 13306489.9
(22) Date de dépôt: 31.10.2013
(51) Int. Cl.: F16L 3/18, F16L 39/00, B64C 1/12, F16L 23/02

(54) **Connecteur de fixation d'une tuyauterie double peau et assemblage obtenu**
Verbindungselement fuer doppelwandiges rohr und hergestellte verbindung
Pipe end fitting for a double walled pipe and obtained assembly

(30) Priorité: 31.10.2012 FR 1260420
(43) Date de publication de la demande: 07.05.2014
(73) Titulaire: Airbus Opérations SAS, 31060 Toulouse (FR)
(72) Inventeur: Courpet, Alexis, 31620 Fronton (FR); Barre, Thomas, 32490 Fregouville (FR); Bourbon, Olivier, 82600 Aucamville (FR); Biteau, Matthieu, 31300 Toulouse (FR); Roques, Jean-Marc, 31770 Colomiers (FR); Escande, Sébastien, 31860 Pins-Justaret (FR); Lenoir, Brice, 31300 Toulouse (FR)
(74) Mandataire: Cenatiempo, Julie Adeline Anne

(56) Documents cités:
- WO-A1-2007/057629
- DE-A1-102009 052 674
- FR-A1- 2 946 103
- FR-A1- 2 948 254
- GB-A- 1 192 700

## Description

La présente invention est relative à un connecteur de fixation d'une tuyauterie flottante double peau, et à un assemblage d'une tuyauterie flottante double peau à une structure réalisé avec ce connecteur de fixation.

Dans un fuselage d'aéronef, en zone pressurisée, les tuyauteries véhiculant du kérosène ou tout autre fluide inflammable sont :
- soit des tuyauteries dites rigides avec des connections serties entre les différents tronçons de la tuyauterie,
- soit des tuyauteries dites flottantes avec des connexions autorisant des déplacements relatifs des différents tronçons de la tuyauterie.

Dans le cas des tuyauteries flottantes, les tuyauteries sont doublées afin de contenir et d'évacuer d'éventuelles fuites de fluide inflammable.

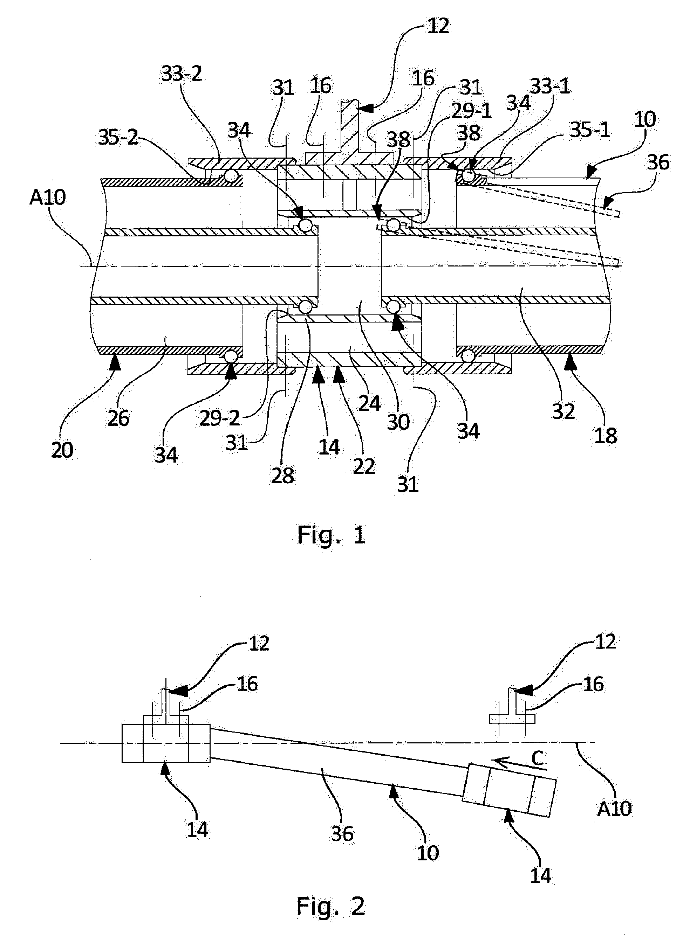

Comme l'illustre la figure 1, une tuyauterie flottante double peau 10 est reliée à la structure 12 de l'aéronef par l'intermédiaire d'un connecteur de fixation 14.

Ce connecteur de fixation 14 comprend des moyens de fixation 16 à la structure 12, et il permet d'effectuer un raccordement flottant entre les extrémités de deux tronçons (18,20) de la tuyauterie flottante double peau 10.

Pour effectuer ce raccordement, le corps 22 du connecteur 14 forme un canal extérieur 24 assurant la continuité du conduit extérieur 26 de la tuyauterie flottante double peau 10, et le connecteur 14 comprend un tube intérieur 28 formant un canal intérieur 30 assurant la continuité du conduit intérieur 32 de la tuyauterie flottante double peau 10.

Des moyens d'étanchéité 34, tels des joints toriques, sont prévus pour garantir l'étanchéité entre les canaux extérieur 24 et intérieur 30 et les conduits extérieur 26 et intérieur 32 de la tuyauterie flottante double peau 10.

En raison de la dangerosité des fluides transportés, ces moyens d'étanchéité 34 doivent être régulièrement inspectés, notamment lors des opérations de maintenance.

A cet effet, le corps 22, et donc le canal extérieur 24, du connecteur 14 est prolongé à chacune de ses extrémités par des manchons extérieurs (33-1,33-2) permettant d'inspecter les moyens d'étanchéité 34 situés entre le canal intérieur 30 et le conduit intérieur 32 de la tuyauterie.

Ces manchons extérieurs (33-1,33-2) sont fixés au corps 22 à l'aide de moyens de fixation 31 démontables, et ils comprennent à l'intérieur les portées de joint (35-1,35-2) des moyens d'étanchéité 34 entre le canal extérieur 24 et le conduit intérieur 32 de la tuyauterie 10, les portées de joint (29-1,29-2) des moyens d'étanchéité 34 entre le canal intérieur 30 et le conduit intérieur 32 de la tuyauterie 10 se situant à l'intérieur du tube intérieur 28.

Lors de certaines opérations de maintenance, un opérateur peut être amené à remplacer un ou plusieurs tronçons défectueux de la tuyauterie flottante double peau 10.

En vue de remplacer un tronçon défectueux, une première méthode consiste à démonter complètement la tuyauterie flottante double peau 10 et ses connecteurs 14.

Cette première méthode n'est pas optimale car elle implique un remplacement systématique des moyens d'étanchéité 34 : chaque joint torique démonté devant être remplacé.

De plus, suivant la longueur de la tuyauterie flottante double peau 10 et le nombre de connecteurs 14, le temps de démontage peut être très long pour seulement remplacer un tronçon de la tuyauterie.

Aussi, selon une seconde méthode illustrée en figure 2, l'opérateur démonte un ou plusieurs connecteurs 14, et il fait coulisser, comme indiqué par la flèche C, un connecteur 14 sur un tronçon 36 de la tuyauterie 10 qui n'est pas à remplacer afin de dégager le tronçon défectueux.

Cette seconde méthode permet de sauver les joints des connecteurs 14 non démontés et de réduire le temps de démontage.

Toutefois, cette seconde méthode présente aussi des inconvénients.

Ainsi, et comme illustré en figure 2, le tronçon 36 de la tuyauterie 10 qui n'est pas à remplacer se retrouve suspendu par une de ses extrémités à un connecteur 14 non démonté, et avec un connecteur 14 démonté restant et pesant sur son autre extrémité.

Ce maintien en suspension du tronçon 36 non démonté a pour conséquence d'endommager les surfaces des portées de joint (35-1,35-2,29-1,29-2) des moyens d'étanchéité 34 du connecteur 14 non démonté.

En effet, le tronçon 36 non démonté se trouve dans une position inclinée par rapport à l'axe A10 de la tuyauterie 10 non prévue lors de la conception du connecteur 14, cette conception prévoyant un angle maximum entre tuyauterie 10 et connecteur 14 de plus ou moins 2 degrés.

Plus en détails, et comme illustré en traits interrompus en figure 1, la position inclinée du tronçon 36 non démonté donne lieu à des contacts 38 métal/métal indésirables entre la tuyauterie 10 et les portées de joints (35-1,35-2,29-1,29-2) des moyens d'étanchéité 34. Enfin, la conception d'un connecteur 14 selon l'art antérieur présente des inconvénients en lien avec la seconde méthode de démontage.

En effet, les moyens de fixation 16 n'autorisant aucune mobilité du connecteur 14 par rapport à la structure 12, il est nécessaire de désolidariser les deux manchons extérieurs (33-1,33-2) du corps 22 du connecteur 14, puis de désolidariser le connecteur 14 de la structure 12 afin de pouvoir démancher le tronçon de la tuyauterie 10 à démonter du connecteur.

Aussi, la présente invention vise à pallier les inconvénients de l'art antérieur.

A cet effet, l'invention a pour objet un connecteur de fixation d'une tuyauterie flottante double peau à une structure, le connecteur comprenant des moyens de fixation à la structure, ainsi qu'un corps externe formant un canal extérieur et un tube interne formant un canal intérieur autour de l'axe longitudinal du connecteur.

Selon l'invention, le connecteur se **caractérise en ce que** ses moyens de fixation à la structure comprennent une liaison fixe secondée par une liaison glissière dans l'axe longitudinal du connecteur, le connecteur comprenant au moins un alésage pour la réalisation de la liaison fixe.

Grâce à cette liaison glissière prévue en complément de la liaison fixe, le connecteur ne doit plus être complètement désolidarisé de la structure pour autoriser le démontage d'un tronçon de la tuyauterie flottante double peau.

De plus, en continuant à être lié à la structure, le connecteur permet de continuer à maintenir l'extrémité du tronçon de la tuyauterie qui n'est pas démonté. On évite ainsi que ce tronçon ne reste suspendu par son autre extrémité.

D'autres caractéristiques et avantages ressortiront de la description qui va suivre de l'invention, description donnée à titre d'exemple uniquement, en regard des dessins annexés sur lesquels :
- la figure 1 est une représentation en coupe d'un connecteur selon l'art antérieur,
- la figure 2 illustre une méthode de démontage d'une tuyauterie flottante double peau fixée à une structure avec des connecteurs selon l'art antérieur,
- la figure 3 est une représentation en coupe d'une tuyauterie doublée fixée à une structure avec un connecteur selon l'invention,
- la figure 4 est une vue en perspective d'un connecteur selon l'invention, avec un manchon intérieur fixé sur celui-ci et avec une première variante de ses moyens de fixation,
- la figure 5 est une vue en perspective d'un connecteur selon l'invention, monté sur une structure avec une première variante de ses moyens de fixation,
- la figure 6 est une vue en perspective d'un connecteur selon l'invention, avec une seconde variante de ses moyens de fixation,
- la figure 7 est une vue en perspective d'un connecteur selon l'invention, monté sur une structure avec une seconde variante de ses moyens de fixation, et
- la figure 8 est une vue en perspective d'un connecteur selon l'invention, avec un manchon intérieur fixé sur celui-ci et avec une première variante de ses moyens de fixation.

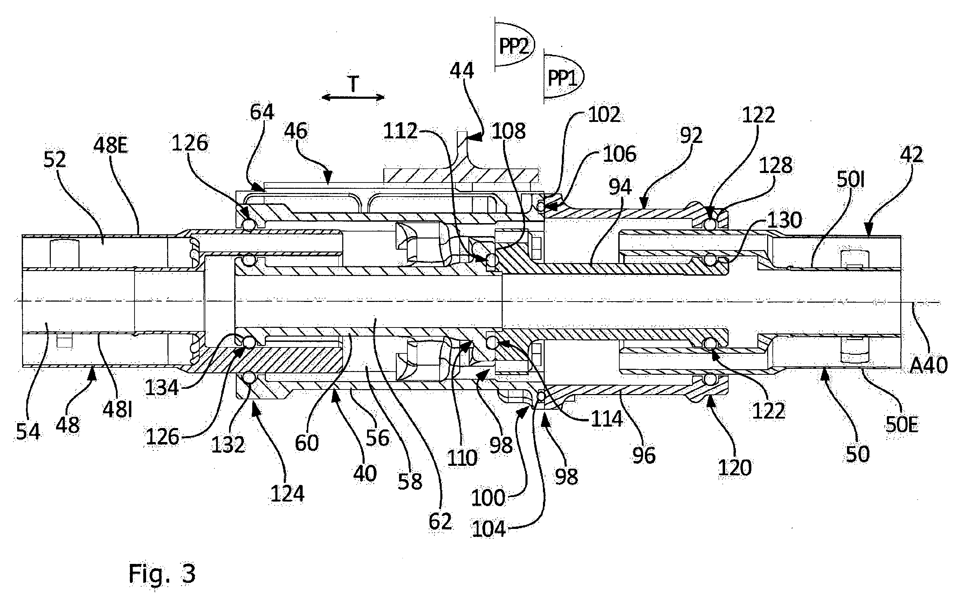

Comme illustré par la figure 3, la présente invention est relative à un connecteur 40 de fixation d'une tuyauterie 42 flottante double peau à une structure 44.

Dans une application particulièrement visée par la présente invention, le connecteur 40 permet de fixer une tuyauterie utilisée pour véhiculer des fluides inflammables dans un fuselage d'aéronef.

A cet effet, le connecteur de fixation 40 comprend des moyens de fixation 46 à la structure 44, et il permet d'effectuer un raccordement flottant entre deux tronçons amont 48 et aval 50 de la tuyauterie 42.

La tuyauterie 42 doublée comprenant un conduit extérieur 52 et un conduit intérieur 54, chaque tronçon amont 48 et aval 50 comprend respectivement une conduite intérieure (48I,50I) et une conduite extérieure (48E,50E).

Pour effectuer le raccordement flottant des tronçons amont 48 et aval 50, le connecteur 40 comprend un corps externe 56 formant un canal extérieur 58 et un tube interne 60 formant un canal intérieur 62 autour de l'axe longitudinal A40 du connecteur.

Le canal extérieur 58 permet d'assurer la continuité du conduit extérieur 52 de la tuyauterie 42, et le canal intérieur 62 permet d'assurer la continuité du conduit intérieur 54 de la tuyauterie 42.

Selon l'invention, les moyens de fixation 46 du connecteur 40 à la structure 44 comprennent une liaison glissière 64 dans l'axe longitudinal A40 du connecteur et une liaison fixe 86 à la structure 44, la liaison glissière 64 secondant la liaison fixe 86.

Ainsi, lors d'une opération de maintenance, et après avoir démonté la liaison fixe 86, il est possible de faire coulisser le connecteur 40 par rapport à la structure 44 sans le désolidariser complétement de celle-ci.

Pour la réalisation de la liaison glissière 64, le connecteur 40 comprend deux rails de maintien (66-1,66-2,67-1,67-2,74-1,74-2).

Dans une première variante de réalisation des moyens de fixation 46 illustrée par les figures 3, 4, 5 et 8, la liaison glissière 64 est à guidage interne, deux rails de maintien (66-1,66-2,67-1,67-2) solidaires du corps 56 du connecteur étant destinés à coulisser dans des gorges (68-1,68-2) de deux profilés (70-1,70-2) formant un support 72 fixe.

Comme illustré par les figures 3, 4 et 5, deux rails de maintien (66-1,66-2) indépendants et solidaires du corps 56 du connecteur sont destinés à coulisser dans les gorges (68-1,68-2) du support 72 fixe.

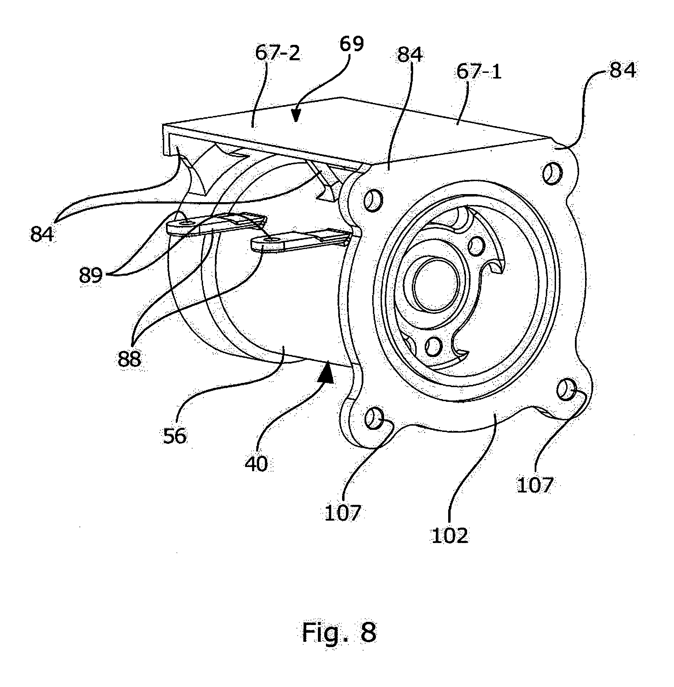

Alternativement, et comme illustré par la figure 8, deux rails de maintien (67-1,67-2) solidaires du corps 56 du connecteur et appartenant à une même pièce plane 69 sont destinés à coulisser dans les gorges (68-1,68-2) du support 72 fixe.

Dans cette alternative, l'invention entend par rail la partie d'une première pièce utilisée pour le guidage en translation de cette première pièce dans une autre pièce : les deux rails de maintien (67-1,67-2) étant les parties de la pièce plane 69 utilisées pour le guidage en translation de la pièce plane 69 dans les gorges (68-1,68-2) du support 72 fixe.

Le support 72 est dit fixe car il est destiné à être relié fixement à la structure 44 par tous moyens appropriés.

Dans cette première variante de réalisation des moyens de fixation 46, les deux profilés (70-1,70-2) formant le support 72 fixe suivent une section en C et sont montés avec leurs gorges (68-1,68-2) se faisant face, les rails de maintien (66-1,66-2,67-1,67-2) suivant un profil plat correspondant à celui des gorges (68-1,68-2).

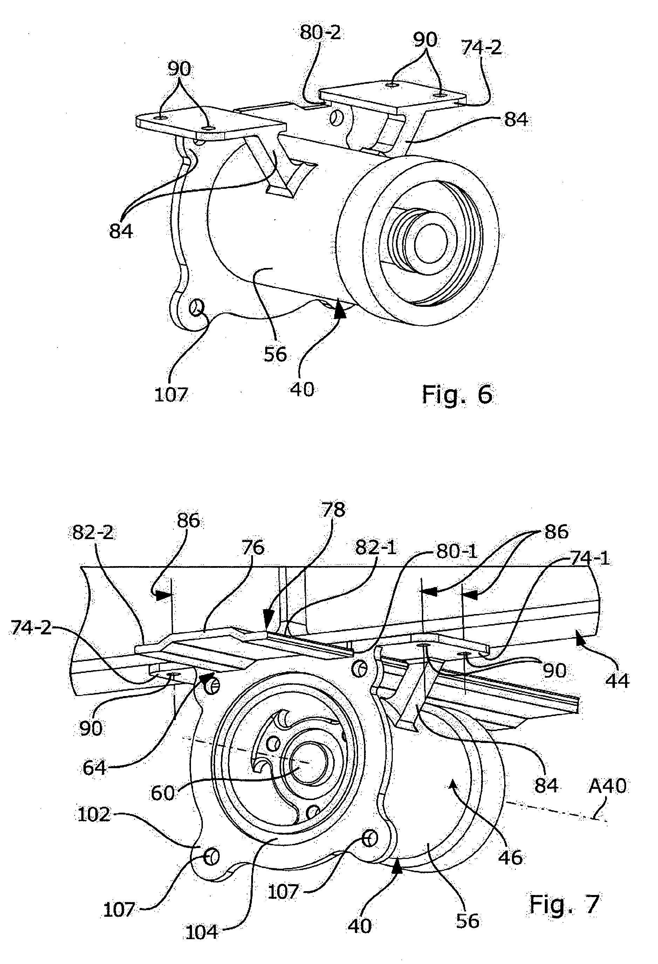

Dans une seconde variante de réalisation des moyens de fixation 46 illustrée par les figures 6 et 7, la liaison glissière 64 est à guidage externe, deux rails de maintien (74-1,74-2) solidaires du corps 56 du connecteur étant destinés à coulisser autour d'un profilé 76 formant un support fixe 78.

Le support 78 est dit fixe car il est destiné à être relié fixement à la structure 44 par tous moyens appropriés.

Dans cette seconde variante de réalisation des moyens de fixation 46, le profilé 76 formant le support 78 fixe suit une section en Ω, et les deux rails de maintien (74-1,74-2) comprennent des gorges (80-1,80-2) venant s'accrocher sur les bords latéraux (82-1,82-2) du profilé 76.

Dans les première et seconde variantes de réalisation des moyens de fixation 46, le corps 56 du connecteur étant de préférence cylindrique, les rails de maintien (66-1,66-2,67-1,67-2,74-1,74-2) sont reliés au corps 56 par des bras 84.

Afin de verrouiller la fixation du connecteur 40 sur la structure 44 lorsque la tuyauterie 42 est montée et par exemple utilisée dans un aéronef en fonctionnement, les moyens de fixation 46 comprennent une liaison fixe 86.

Cette liaison fixe 86 est démontable afin de pouvoir débloquer la liaison glissière 64 et faire coulisser le connecteur 40.

Lorsqu'elle est effectuée, cette liaison fixe 86 permet d'immobiliser le connecteur 40 par rapport à la structure 44.

En vue de pouvoir être démontée, cette liaison fixe 86 est par exemple réalisée avec des vis venant relier le connecteur 40 à la structure 44.

Aussi, le connecteur 40 comprend, selon l'invention, au moins un alésage (89,90) pour la réalisation de cette liaison fixe 86, ces alésages (89,90) servant par exemple à recevoir les vis de la liaison fixe 86 démontable.

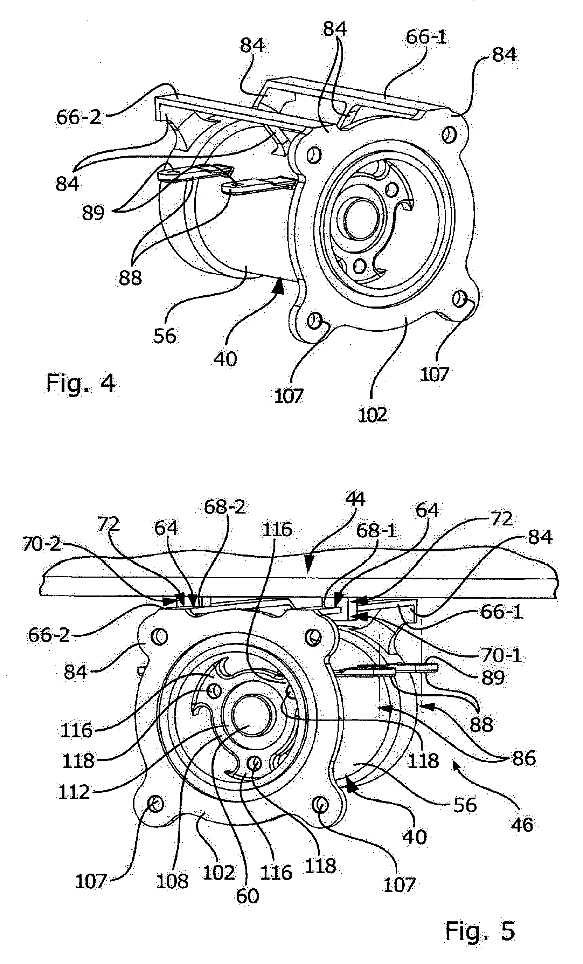

Dans la première variante de réalisation des moyens de fixation 46 illustrée en figure 4, 5 et 8, le connecteur 40 comprend au moins une patte de fixation 88 s'étendant depuis le corps 56 du connecteur, et au moins un alésage 89 de la liaison fixe 86 est réalisé dans cette patte de fixation 88.

De préférence, le connecteur 40 comprend deux pattes de fixation 88 de part et d'autre de son corps 56, les alésages 89 étant réalisés aux extrémités extérieures de ces pattes de fixation 88.

Dans la seconde variante de réalisation des moyens de fixation 46, au moins un alésage 90 de la liaison fixe 86 est réalisé dans un des rails de maintien (74-1,74-2).

De préférence, deux alésages 90 sont réalisés dans chaque rail de maintien (74-1,74-2).

Grâce à la mobilité en translation T du connecteur 40 autorisée par la liaison glissière 64 lorsque la liaison fixe 86 est démontée, et comme illustré en figure 3, le raccordement flottant effectué par le connecteur 40 ne nécessite qu'un manchon double peau 92 afin de pouvoir démonter l'un des tronçons amont 48 ou aval 50 de la tuyauterie 42 sans pour cela devoir les incliner ou les laisser suspendus.

Ce manchon double peau 92 comprend un manchon interne 94 et un manchon externe 96.

Le manchon interne 94 et le manchon externe 96 permettent respectivement d'assurer la continuité du conduit intérieur 54 de la tuyauterie 42 avec le canal intérieur 62 du connecteur, et la continuité du conduit extérieur 52 de la tuyauterie 42 avec le canal extérieur 58 du connecteur.

Aussi, selon l'invention, le connecteur 40 comprend une interface de liaison 98 pour un manchon double peau 92 à une seule de ses extrémités 100.

Pour des raisons de sécurité, la présence du manchon externe 96 est obligatoire afin de pouvoir vérifier l'étanchéité du raccordement flottant effectué entre la conduite intérieure 48I du tronçon amont 48 et la conduite intérieure 50I du tronçon aval 50.

Aussi, l'interface de liaison 98 comprend une portée externe 102 de réception et de fixation du manchon externe 96 à l'extrémité 100 du corps externe 56 du connecteur.

Dans une variante de réalisation préférée de l'interface 98, cette portée externe 102 est située dans un plan PP1 perpendiculaire à l'axe longitudinal A40 du connecteur et intègre un logement 104, tel une gorge périphérique, pour des moyens d'étanchéité 106, tels un joint torique.

Toujours dans cette variante de réalisation préférée de l'interface 98, la portée externe 102 comprend des alésages 107 pour la fixation du manchon externe 96 réalisée à l'aide de moyens de fixation démontables, tels des vis.

Eventuellement, et comme illustré par les figures 4 et 5, la portée externe 102 n'intègre pas de logement pour des moyens d'étanchéité, ce logement étant prévu dans la portée correspondante du manchon externe 96.

Afin de faciliter le montage et le démontage des tronçons amont 48 ou aval 50 de la tuyauterie 42, l'interface de liaison 98 comprend une portée interne 108 de réception et de fixation du manchon interne 94 à l'extrémité 110 du tube interne 60 la plus proche de l'extrémité 100 du corps externe 56 du connecteur.

Dans une variante de réalisation préférée de l'interface 98, la portée interne 108 est située dans un plan PP2 perpendiculaire à l'axe longitudinal A40 du connecteur.

Cette portée interne 108 intègre un logement 112, tel une gorge périphérique, pour des moyens d'étanchéité 114, tels un joint torique.

Toujours dans cette variante de réalisation préférée de l'interface 98, et comme illustré en figure 5, des branches internes 116 permettant de relier le tube interne 60 au corps externe 56 du connecteur, ces branches internes 116 forment des prolongements de la portée interne 108 dans lesquels sont réalisés des alésages 118 pour la fixation du manchon interne 94 réalisée à l'aide de moyens de fixation démontables, tels des vis.

Afin d'assurer la liaison électrique entre les conduites (48E,48I,50E,50I) des tronçons (48,50) de la tuyauterie 42 à la structure 44, le connecteur 40 et le manchon double peau 92 sont réalisés dans un matériau métallique.

De préférence, le connecteur 40 est obtenu par un procédé de moulage.

Selon l'invention, le manchon double peau 92 comprend à son extrémité libre 120 des moyens d'étanchéité 122 avec le tronçon aval 50 de la tuyauterie, et le connecteur 40 comprend aussi à son extrémité libre 124 des moyens d'étanchéité 126 avec le tronçon amont 48 de la tuyauterie.

Plus précisément, le manchon externe 96 et le manchon interne 94 comprennent des logements (128,130) pour la réception des moyens d'étanchéité 122 à l'extrémité libre 120 du manchon 92, et le corps externe 56 et le tube interne 60 comprennent des logements (132,134) pour la réception des moyens d'étanchéité 126 à l'extrémité libre 124 du connecteur 40.

Ainsi, la conception des conduites (48E,48I,50E,50I) des tronçons (48,50) de la tuyauterie 42 est simplifiée car leurs extrémités ne comprennent plus de logement pour les moyens d'étanchéité, mais seulement les surfaces planes sur lesquelles portent les moyens d'étanchéité (122,126).

Le connecteur 40 selon l'invention permet d'éviter d'avoir des connecteurs suspendus lors des opérations de maintenance, d'assurer le maintien sur la structure des tronçons de tuyauterie adjacents à un tronçon démonté lors des opérations de maintenance, et de garantir l'étanchéité au niveau du raccordement flottant entre deux tronçons de la tuyauterie.

Plus généralement, le connecteur peut facilement s'intégrer aux installations existantes en vue de faciliter les opérations d'installation et de maintenance d'une tuyauterie doublée.

La présente invention couvre aussi un assemblage d'une tuyauterie 42 flottante double peau à une structure 44, dans lequel l'assemblage est réalisé avec un connecteur 40, ainsi qu'une structure d'aéronef comprenant un tel assemblage.

Enfin, la présente invention vise aussi un procédé de démontage d'une tuyauterie 42 flottante double peau.

La tuyauterie 42 flottante double peau étant assemblée à la structure 44 avec un connecteur 40 selon l'invention, et ce connecteur 40 permettant d'effectuer un raccordement flottant entre les deux tronçons amont 48 et aval 50 de la tuyauterie 42, le procédé de démontage consiste à démonter la liaison fixe 86 du connecteur 40 à la structure 44 puis à démonter au moins un tronçon 48,50 de la tuyauterie 42 en faisant coulisser le connecteur 40 par rapport à la structure 44 mais sans désolidariser complétement ce connecteur 40 de cette structure 44.

De plus, le connecteur 40 comprenant l'interface de liaison 98 pour le manchon double peau 92 à l'une de ses extrémités 100, et ce manchon double peau 92 étant utilisé pour la réception du tronçon amont 48 ou aval 50 d'une tuyauterie 42, ce procédé de démontage prévoit en outre de désolidariser ce manchon double peau 92 du connecteur 40 en vue du démontage du tronçon 48 ou 50 reçu par ce manchon 92.

## Revendications

1. Connecteur (40) de fixation d'une tuyauterie (42) flottante double peau à une structure (44), le connecteur (40) comprenant des moyens de fixation (46) à la structure, ainsi qu'un corps externe (56) formant un canal extérieur (58) et un tube interne (60) formant un canal intérieur (62) autour de l'axe longitudinal (A40) du connecteur, le connecteur (40) étant **caractérisé en ce que** ses moyens de fixation (46) à la structure (44) comprennent une liaison fixe (86) secondée par une liaison glissière (64) dans l'axe longitudinal (A40) du connecteur, le connecteur (40) comprenant au moins un alésage (89,90) pour la réalisation de la liaison fixe (86).

2. Connecteur (40) de fixation selon la revendication 1, dans lequel la liaison glissière (64) est à guidage interne, deux rails de maintien (66-1,66-2,67-1,67-2) solidaire du corps (56) du connecteur étant destinés à coulisser dans des gorges (68-1,68-2) de deux profilés (70-1,70-2) formant un support (72) fixe.

3. Connecteur (40) de fixation selon la revendication précédente, dans lequel, le connecteur (40) comprenant au moins une patte de fixation (88) s'étendant depuis le corps (56) du connecteur, au moins un alésage (89) de la liaison fixe (86) est réalisé dans cette patte de fixation (88).

4. Connecteur (40) de fixation selon la revendication 1, dans lequel la liaison glissière est à guidage externe, deux rails de maintien (74-1,74-2) solidaires du corps (56) du connecteur étant destinés à coulisser autour d'un profilé (76) formant un support fixe (78).

5. Connecteur (40) de fixation selon la revendication précédente, dans lequel au moins un alésage (90) de la liaison fixe (86) est réalisé dans un des rails de maintien (74-1,74-2).

6. Connecteur (40) de fixation selon l'une des revendications 1 à 5, dans lequel le connecteur (40) comprend une interface de liaison (98) pour un manchon double peau (92) à une seule de ses extrémités (100).

7. Connecteur (40) de fixation selon la revendication précédente, dans lequel l'interface de liaison (98) comprend une portée interne (108) de réception et de fixation du manchon interne (94) à l'extrémité (110) du tube interne (60) la plus proche de l'extrémité (100) du corps externe (56) du connecteur.

8. Connecteur (40) de fixation selon la revendication précédente, dans lequel la portée interne (108) est située dans un plan (PP2) perpendiculaire à l'axe longitudinal (A40) du connecteur.

9. Connecteur (40) de fixation selon la revendication 7 ou la revendication 8, dans lequel la portée interne (108) intègre un logement (112) pour des moyens d'étanchéité (114).

10. Connecteur (40) de fixation selon l'une des revendications 6 à 9, dans lequel, un manchon double peau (92) comprenant un manchon externe (96), et l'interface de liaison (98) comprenant une portée externe (102) de réception et de fixation du manchon externe (96) à une extrémité (100) du corps externe du connecteur, cette portée externe (102) est située dans un plan (PP1) perpendiculaire à l'axe longitudinal (A40) du connecteur et intègre un logement (104) pour des moyens d'étanchéité (106).

11. Connecteur (40) de fixation selon l'une des revendications précédentes, dans lequel le connecteur (40) est obtenu par un procédé de moulage.

12. Assemblage d'une tuyauterie (42) flottante double peau à une structure (44), dans lequel l'assemblage est réalisé avec un connecteur (40) selon l'une des revendications précédentes.

13. Structure d'aéronef comprenant un assemblage selon la revendication précédente.

14. Procédé de démontage d'une tuyauterie (42) flottante double peau, la tuyauterie (42) flottante double peau étant assemblée à une structure (44) avec un connecteur (40) selon l'une des revendications 1 à 11, le connecteur (40) permettant d'effectuer un raccordement flottant entre deux tronçons amont (48) et aval (50) de la tuyauterie (42), le procédé de démontage étant **caractérisé en ce qu'il** consiste à démonter la liaison fixe (86) du connecteur (40) à la structure (44) puis à démonter au moins un tronçon (48,50) de la tuyauterie (42) en faisant coulisser le connecteur (40) par rapport à la structure (44) mais sans désolidariser complétement ce connecteur (40) de cette structure (44).

15. Procédé de démontage d'une tuyauterie (42) flottante double peau selon la revendication précédente, le connecteur (40) comprenant une interface de liaison (98) pour un manchon double peau (92) à une seule de ses extrémités (100), et ce manchon double peau (92) étant utilisé pour la réception du tronçon amont (48) ou aval (50) de la tuyauterie (42), ce procédé prévoit en outre de désolidariser ce manchon double peau (92) du connecteur (40) en vue du démontage du tronçon (48,50) reçu par ce manchon (92).

## Patentansprüche

1. Verbindungselement (40) für die Befestigung einer doppelwandigen schwebenden Rohrleitung (42) an einer Struktur (44), wobei das Verbindungselement (40) Mittel (46) zur Befestigung an der Struktur ebenso wie einen äußeren Rumpf (56), der einen äußeren Kanal (58) bildet, und ein inneres Rohr (60) aufweist, das um die Längsachse (A40) des Verbindungselements einen inneren Kanal (62) bildet, wobei das Verbindungselement (40) **dadurch gekennzeichnet ist, dass** die Mittel (46) zur Befestigung an der Struktur (44) eine feste Verbindung (86) aufweisen, die von einer in Richtung der Längsachse (A40) des Verbindungselements gleitenden Verbindung (64) unterstützt ist, wobei das Verbindungselement (40) wenigstens eine Ausnehmung (89, 90) für das Bewerkstelligen der festen Verbindung (86) aufweist.

2. Verbindungselement (40) zur Befestigung nach Anspruch 1, bei dem die gleitende Verbindung (64) innen geführt ist, indem zwei am Rumpf (56) des Verbindungselements angebrachte Halteschienen (66-1, 66-2, 67-1, 67-2) dazu vorgesehen sind, in Einzügen (68-1, 68-2) zweier Profile (70-1, 70-2) zu gleiten, die eine feste Halterung (72) bilden.

3. Verbindungselement (40) zur Befestigung nach dem vorhergehenden Anspruch, bei dem das Verbindungselement (40) wenigstens eine sich vom Rumpf (56) des Verbindungselements weg erstreckende Befestigungslasche (88) aufweist und wenigstens eine Ausnehmung (89) der festen Verbindung (86) in dieser Befestigungslasche (88) ausgebildet ist.

4. Verbindungselement (40) zur Befestigung nach Anspruch 1, bei dem die gleitende Verbindung außen geführt ist, indem zwei am Rumpf (56) des Verbindungselements angebrachte Halteschienen (74-1, 74-2) dazu vorgesehen sind, um ein Profil (76) herumzugleiten, das eine feste Halterung (78) bildet.

5. Verbindungselement (40) zur Befestigung nach dem vorhergehenden Anspruch, bei dem wenigstens eine Ausnehmung (90) der festen Verbindung (86) in einer der Halteschienen (74-1, 74-2) ausgebildet ist.

6. Verbindungselement (40) zur Befestigung nach einem der Ansprüche 1 bis 5, bei dem das Verbindungselement (40) an einem seiner Enden (100) eine Verbindungsschnittstelle (98) für einen doppelwandigen Stutzen (92) aufweist.

7. Verbindungselement (40) zur Befestigung nach dem vorhergehenden Anspruch, bei dem die Befestigungsschnittstelle (98) eine innere Auflagefläche (108) für die Aufnahme und Befestigung des internen Stutzens (94) am Ende (110) des inneren Rohres (60) in nächster Nähe zum Ende (100) des äußeren Rumpfs (56) des Verbindungselements aufweist.

8. Verbindungselement (40) zur Befestigung nach dem vorhergehenden Anspruch, bei dem sich die interne Auflagefläche (108) in einer im rechten Winkel zur Längsachse (A40) des Verbindungselements ausgerichteten Ebene (PP2) befindet.

9. Verbindungselement (40) zur Befestigung nach Anspruch 7 oder Anspruch 8, bei dem die interne Auflagefläche (108) eine Aufnahme (112) für Dichtmittel (114) einschließt.

10. Verbindungselement (40) zur Befestigung nach einem der Ansprüche 6 bis 9, bei dem ein doppelwandiger Stutzen (92) einen äußeren Stutzen (96) umfasst und die Verbindungsschnittstelle (98) eine externe Auflagefläche (102) für die Aufnahme und Befestigung des äußeren Stutzens (96) an einem Ende (100) des äußeren Rumpfes des Verbindungselements aufweist und sich die äußere Auflagefläche (102) in einer im rechten Winkel zur Längsachse (A40) des Verbindungselements ausgerichteten Ebene (PP1) befindet und eine Aufnahme (104) für Dichtmittel (106) einschließt.

11. Verbindungselement (40) zur Befestigung nach einem der vorhergehenden Ansprüche, bei dem das Verbindungselement (40) durch einen Gießvorgang erzeugt ist.

12. Zusammenstellung einer schwebenden doppelwandigen Rohrleitung (42) mit einer Struktur (44), bei der die Zusammenstellung durch ein Verbindungselement (40) nach einem der vorhergehenden Ansprüche bewerkstelligt ist.

13. Struktur eines Luftfahrzeugs mit einem Zusammenstellung nach dem vorhergehenden Anspruch.

14. Verfahren zum Abbau einer schwebenden doppelwandigen Rohrleitung (42), wobei die schwebende doppelwandige Rohrleitung (42) mit einer Struktur (44) mithilfe eines Verbindungselements (40) nach einem der Ansprüche 1 bis 11 zusammengebaut ist, und das Verbindungselement (40) die Herstellung einer schwebenden Verbindung zwischen zwei Leitungsabschnitten vor (48) und nach (50) der Rohrleitung (42) ermöglicht, wobei das Verfahren zum Abbau **dadurch gekennzeichnet ist, dass** dieses darin besteht, die feste Verbindung (86) des Verbindungselements (40) mit der Struktur (44) zu lösen und dann wenigstens eine der Teilleitungen (48, 50) der Rohrleitung (42) abzubauen, indem das Verbindungselement (40) veranlasst wird, bezüglich der Struktur (44) zu gleiten, ohne dass das Verbindungselement (40) vollständig von dieser Struktur (44) gelöst wird.

15. Verfahren zum Abbau einer schwebenden doppelwandigen Rohrleitung (42) nach dem vorhergehenden Anspruch, wobei das Verbindungselement (40) an einem seiner Enden (100) eine Verbindungsschnittstelle (98) für einen doppelwandigen Stutzen (92) aufweist und dieser doppelwandige Stutzen (92) für die Aufnahme der Teilleitung vor (48) oder nach (50) der Rohrleitung (42) verwendet wird und das Verfahren außerdem vorsieht, den doppelwandigen Stutzen (92) des Verbindungselements (40) in Anbetracht des Abbaus der von diesen Stutzen (92) aufgenommenen Teilleitung (48, 50) zu lösen.

## Claims

1. Connector (40) for securing floating double skin pipework (42) to a structure (44), the connector (40) comprising means (46) for securing to the structure, and also an external body (46) forming an outer channel (58) and an internal tube (60) forming an inner channel (62) around the longitudinal axis (A40) of the connector, the connector (40) being **characterized in that** said means (46) for securing to the structure (44) comprise a fixed connection (86) backed up by a sliding connection (64) along the longitudinal axis (A40) of the connector, the connector (40) comprising at least one bore (89, 90) for producing the fixed connection (86).

2. Securing connector (40) according to Claim 1, wherein the sliding connection (64) has internal guidance, two holding rails (66-1, 66-2, 67) secured to the body (56) of the connector being intended to slide in grooves (68-1, 68-2) in two profiled elements (70-1, 70-2) forming a fixed support (72).

3. Securing connector (40) according to the preceding claim, wherein, with the connector (40) comprising at least one securing lug (88) extending from the body (56) of the connector, at least one bore (89) of the fixed connection (86) is produced in this securing lug (88).

4. Securing connector (40) according to Claim 1, wherein the sliding connection has external guidance, two holding rails (74-1, 74-2) secured to the body (56) of the connector being intended to slide around a profiled element (76) forming a fixed support (78).

5. Securing connector (40) according to the preceding claim, wherein at least one bore (90) of the fixed connection (86) is produced in one of the holding rails (74-1, 74-2).

6. Securing connector (40) according to one of Claims 1 to 5, wherein the connector (40) comprises a connection interface (98) for a double skin sleeve (92) at only one of its ends (100).

7. Securing connector (40) according to the preceding claim, wherein the connection interface (98) comprises an internal bearing surface (108) for receiving and securing the internal sleeve (94) at the end (110) of the internal tube (60) closest to the end (100) of the external body (56) of the connector.

8. Securing connector (40) according to the preceding claim, wherein the internal bearing surface (108) is located in a plane (PP2) perpendicular to the longitudinal axis (A40) of the connector.

9. Securing connector (40) according to Claim 7 or Claim 8, wherein the internal bearing surface (108) incorporates a housing (112) for sealing means (114).

10. Securing connector (40) according to one of Claims 6 to 9, wherein, with a double skin sleeve (92) comprising an external sleeve (96) and the connection interface (98) comprising an external bearing surface (102) for receiving and securing the external sleeve (96) at one end (100) of the external body of the connector, this external bearing surface (102) is located in a plane (PP1) perpendicular to the longitudinal axis (A40) of the connector and incorporates a housing (104) for sealing means (106).

11. Securing connector (40) according to one of the preceding claims, wherein the connector (40) is obtained by a moulding process.

12. Assembly of floating double skin pipework (42) on a structure (44), wherein the assembly is produced by way of a connector (40) according to one of the preceding claims.

13. Aircraft structure comprising an assembly according to the preceding claim.

14. Method for removing floating double skin pipework (42), the floating double skin pipework (42) being assembled on a structure (44) by way of a connector (40) according to one of Claims 1 to 11, the connector (40) making it possible to produce a floating connection between an upstream portion (48) and a downstream portion (50) of the pipework (42), the removal method being **characterized in that** it consists in removing the fixed connection (86) of the connector (40) to the structure (44) and then in removing at least one portion (48, 50) of the pipework (42) by sliding the connector (40) with respect to the structure (44) but without completely detaching this connector (40) from this structure (44).

15. Method for removing floating double skin pipework (42) according to the preceding claim, the connector (40) comprising a connection interface (98) for a double skin sleeve (92) at only one of its ends (100) and this double skin sleeve (92) being used to receive the upstream portion (48) or downstream portion (50) of the pipework (42), this method also providing for this double skin sleeve (92) to be detached from the connector (40) in order to remove the portion (48, 50) held by this sleeve (92).
